# EUROPÄISCHE PATENTANMELDUNG

(11) **EP 2 500 605 A1**
(43) Veröffentlichungstag der Anmeldung: **19.09.2012**
(21) Anmeldenummer: 12153602.3
(22) Anmeldetag: 02.02.2012
(51) Int. Cl.: F16H 61/02, B63H 23/30, F16H 63/48

(54) **Hydrauliksystem**

(30) Priorität: 17.03.2011 DE 102011005706
(71) Anmelder: ZF Friedrichshafen AG, 88038 Friedrichshafen (DE)
(72) Erfinder: Stamml, Michael, 78462 Konstanz (DE)

(57) **Zusammenfassung**

Ein Hydrauliksystem für ein Schiffsgetriebe umfasst mindestens ein Getriebeschaltelement, mindestens ein Bremsschaltelement (8) und eine Zuschalteinrichtung (3) zum Öffnen oder Schließen des Bremsschaltelements (8), wobei das Getriebeschaltelement und das Bremsschaltelement (8) mit einem selben Wellenstrang drehfest verbindbar sind, wobei der Wellenstrang über das Getriebeschaltelement in dessen geschlossenem Zustand antreibbar ist und wobei der Wellenstrang über das Bremsschaltelement (8) in dessen geschlossenem Zustand blockierbar ist. Hierbei ist zwischen der Zuschalteinrichtung (3) und dem Bremsschaltelement (8) ein Sicherheitsventil (4) angeordnet, wobei je nach Schaltstellung des Sicherheitsventils (4, 9) das Bremsschaltelement (8) mit der Zuschalteinrichtung (3) verbunden und damit zuschaltbar ist oder von dieser getrennt ist und damit abschaltbar ist, und wobei das Sicherheitsventil (4,9) derart mit dem Getriebeschaltelement hydraulisch wirkverbunden ist, dass die Schaltstellung des Sicherheitsventils (4,9) durch den an dem Getriebeschaltelement wirkenden Druck einstellbar ist.

## Beschreibung

Die Erfindung betrifft ein Hydrauliksystem nach dem Oberbegriff des unabhängigen Patentanspruchs 1.

Schiffsgetriebe weisen in manchen Ausführungen ein Bremsschaltelement auf, welches auch Wellenbremse bezeichnet wird, mit welcher die Propellerwelle für unterschiedliche Anwendungsfälle festgesetzt werden kann. So ist es beispielsweise aus Sicherheitsgründen erforderlich, während Wartungsarbeiten am Schiffsrumpf die Propellerwelle zu blockieren um Verletzungen des Wartungspersonals durch einen drehenden Propeller zu vermeiden, da der Propeller auch bei stehender Antriebsmaschine selbsttätig durch die Strömungsenergie des umgebenden Wassers angetrieben werden kann. Durch diesen sekundärseitigen Antrieb des Getriebes kann es darüber hinaus zu Getriebeschäden infolge mangelhafter Schmierung kommen, da in diesem Falle die primärseitig angetriebene Getriebepumpe steht und kein Öl fördern kann. Außerdem kann die Wellenbremse dazu dienen, bei so genannten Crash-Stopp-Manövern, welche beispielsweise zum schnellen Abbremsen eines Schiffes erforderlich sind, ein schnelleres Umsteuern der Drehrichtung des Propellers zu ermöglichen. Eine solche Wellenbremse ist üblicherweise als reibschlüssige Bremse ausgebildet und wird hydraulisch betätigt. Es sind Hydrauliksysteme bekannt, in welchen zu deren Zuschaltung die Wellenbremse durch eine Druckbeaufschlagung aus einer Druckquelle geschlossen und damit die Propellerwelle festgesetzt wird. Eine solche Druckquelle ist beispielsweise die Druckölversorgung eines Schiffsgetriebes. Zwischen der Wellenbremse und der Druckquelle ist hierzu eine Zuschalteinrichtung in Gestalt eines Bremsventils, welches beispielsweise als ein elektromagnetisch schaltbares 4/2-Wegeventil ausgebildet ist, angeordnet. In einer ersten Schaltstellung, in welcher die Wellenbremse geöffnet ist und die Propellerwelle sich drehen kann, ist die hydraulische Verbindung von der Druckquelle zum Bremsschaltelement unterbrochen und das Bremsschaltelement wird über das Bremsventil entlüftet, d.h. mit einem drucklosen Raum verbunden, wodurch das Bremsschaltelement nicht druckbeaufschlagt und geöffnet ist. Soll nun die Propellerwelle blockiert, d.h. die Wellenbremse zugeschaltet werden, so wird mittels einer elektrischen Betätigung des Bremsventils dieses in eine zweite Schaltstellung verstellt, in welcher die Druckquelle das Bremsschaltelement mit Druck beaufschlagt und schließt.

Wird die Wellenbremse zugeschaltet, bzw. geschlossen während in dem Schiffsgetriebe ein Gang eingelegt ist und damit die Propellerwelle angetrieben werden kann, oder wird aus einer Neutralstellung des Schiffsgetriebes heraus ein Gang zugeschaltet während die Wellenbremse noch geschlossen ist, wird das Getriebe blockiert. Die Folge hiervon ist eine Beschädigung des Getriebes, insbesondere eine thermische Zerstörung der jeweils geschlossenen Getriebekupplung. Darüber hinaus sind Beschädigungen wie beispielsweise von Wellen, Verzahnungen oder Lagern möglich.

Aus dem Stand der Technik sind Sicherheitsschaltungen bekannt, bei welchen das gleichzeitige Schalten von Wellenbremse und Getriebeschaltelementen elektronisch verhindert wird. So wird beispielsweise beim elektrischen Zuschalten eines Getriebeschaltelements das Bremsventil abgeschaltet und damit das Bremsschaltelement von der Druckquelle getrennt und entlüftet. Kommt es jedoch zu einer Störung in der Elektronik, ist dieser Schutz nicht mehr gewährleistet. Des Weiteren hat der Getriebehersteller wenig Einfluss darauf, ob diese Sicherheitsfunktion wirklich installiert ist. Auch bei Neuinbetriebnahmen besteht die Gefahr, dass es Störungen gibt, oder noch nicht alle Systeme auf dem Schiff voll funktionsfähig sind.

Die DE 102004018962 B3 zeigt eine Sicherheitsschaltung eines Hydraulikkreises für ein Doppelkupplungsgetriebe eines Kraftfahrzeuges. Eine Sicherheitsschaltung soll hierbei vermeiden, dass zwei Gangstufen gleichzeitig eingelegt bzw. zwei Kupplungen unter einem hydraulischen Druck geschlossen werden, da dies zu einer Zerstörung der Radsätze und / oder der Kupplungen führen kann. Im Falle einer Fehlfunktion wird eine Kupplung mittels einer Steuereinrichtung abgeschaltet, wobei die Steuereinrichtung von einer elektronischen Getriebesteuerung angesteuert wird. Im Falle einer Störung der Elektronik ist auch bei dieser Lösung nachteiligerweise der Schutz der Schaltelemente nicht gegeben.

Die der Erfindung zugrunde liegende Aufgabe ist es, ein Hydrauliksystem zu schaffen, bei welcher mit einer Sicherheitsschaltung zuverlässig und auf einfache Weise eine unbeabsichtigte gleichzeitige Druckbeaufschlagung mehrerer hydraulischer Schaltelemente, welche zu einem Blockieren des Getriebes führen würde, verhindert wird.

Diese Aufgabe wird durch die Merkmale des Patentanspruchs 1 gelöst.

Ein Hydrauliksystem für ein Schiffsgetriebe umfasst mindestens ein Getriebeschaltelement, mindestens ein Bremsschaltelement und eine Zuschalteinrichtung zum Öffnen oder Schließen des Bremsschaltelements. Die Zuschalteinrichtung ist hierbei zwischen einer Druckquelle und dem Bremsschaltelement angeordnet und bestimmt dessen Druckzustand. Das Getriebeschaltelement und das Bremsschaltelement sind mit einem selben Wellenstrang drehfest verbindbar, wobei der Wellenstrang über das bei einem bestimmten Druckzustand geschlossene Getriebeschaltelement antreibbar ist und wobei der Wellenstrang über das bei einem bestimmten Druckzustand geschlossene Bremsschaltelement blockierbar ist.

Ein gleichzeitiges unbeabsichtigtes Schließen von Getriebeschaltelement und Bremsschaltelement wird durch eine Sicherheitsschaltung verhindert, welche erfindungsgemäß als hydraulische Schaltung ausgebildet ist.

Erfindungsgemäß ist zwischen der Zuschalteinrichtung und dem Bremsschaltelement ein Sicherheitsventil angeordnet ist, wobei je nach Schaltstellung des Sicherheitsventils das Bremsschaltelement mit der Zuschalteinrichtung verbunden und damit zuschaltbar ist oder von dieser getrennt und damit abschaltbar ist. Das Sicherheitsventil ist derart mit dem Getriebeschaltelement hydraulisch wirkverbunden ist, dass die Schaltstellung des Sicherheitsventils durch den an dem Getriebeschaltelement in dessen geschlossenem Zustand wirkenden Druck einstellbar ist. Hierdurch ist der Druckzustand im Bremsschaltelement von dem Druckzustand des Getriebeschaltelements bestimmbar.

Somit wird vorteilhafterweise der Druckzustand und damit der Schaltzustand des Bremsschaltelements unmittelbar von dem Druckzustand des Getriebeschaltelements welcher der sicherer Indikator dessen Schaltzustands ist, bestimmt. Hierdurch können sich keine Fehler in der Elektronik auf eine Abschaltung des Bremsschaltelements bei einer Druckbeaufschlagung eines Getriebeschaltelements auswirken.

Vorteilhafte Ausgestaltungen der Erfindung ergeben sich aus den Unteransprüchen.

Eine besonders vorteilhafte Ausgestaltung zeigt, dass das Sicherheitsventil derart angeordnet und ausgebildet ist, dass bei einem Druckzustand an dem Getriebeschaltelement , in welchem das Getriebeschaltelement geschlossen ist, durch diesen Druckzustand das Sicherheitsventil in eine derartige Position geschaltet ist, in welcher an dem Bremsschaltelement ein Druckzustand eingestellt ist, bei welchem das Bremsschaltelement geöffnet ist. Somit ist sichergestellt, dass das Bremsschaltelement immer geöffnet ist so lange oder so bald das Getriebeschaltelement geschlossen ist.

Es ist in einer Ausgestaltung möglich, dass sowohl das Getriebeschaltelement als auch das Bremsschaltelement im druckbeaufschlagten Zustand geschlossen und in drucklosem Zustand geöffnet sind, wobei das Sicherheitsventil derart angeordnet und ausgebildet ist, dass bei Druckbeaufschlagung eines Getriebeschaltelements das Sicherheitsventil in eine Schaltstellung geschaltet wird, in welcher das Bremsschaltelement hydraulisch von der Zuschalteinrichtung getrennt und drucklos ist.

In einer Ausgestaltung der Erfindung weist das Hydrauliksystem zwei Getriebeschaltelemente auf, von welchen nur jeweils eines druckbeaufschlagt ist. Zwischen den Getriebeschaltelementen und dem Sicherheitsventil ist ein Wechselventil angeordnet ist, welches derart ausgebildet ist, dass vorteilhafterweise nur das jeweils druckbeaufschlagte und damit geschlossene Getriebeschaltelement mit dem Sicherheitsventil verstellend wirkverbunden ist.

In diesem Zusammenhang sieht eine Ausgestaltungsform vor, dass das Wechselventil drei Anschlüsse aufweist, wobei ein erster Anschluss mit einem Druckzweig des ersten Getriebeschaltelements und ein zweiter Anschluss mit einem Druckzweig eines zweiten Getriebeschaltelements verbunden sind. Ein dritter Anschluss ist mit dem Steuerdruckanschluss des Sicherheitsventils verbunden. In dem Wechselventil ist ein Verschlusselement derart angeordnet, dass dieses in einer ersten Schaltstellung den zweiten Anschluss und in einer zweiten Schaltstellung den ersten Anschluss veschließt, wobei das Verschlusselement bei einer Druckbeaufschlagung des ersten Getriebeschaltelements die erste Schaltstellung einnimmt und bei einer Druckbeaufschlagung des zweiten Getriebeschaltelements die zweite Schaltstellung einnimmt.

Eine Ausgestaltung der Erfindung sieht vor, dass das Sicherheitsventil als ein 2/2-Wegeventil ausgebildet ist. Bevorzugt ist dieses Wegeventil hydraulisch schaltbar.

Hierbei ist es möglich, dass das Bremsschaltelement in einer ersten Schaltstellung des Sicherheitsventils durch dieses mit der Druckquelle verbindbar ist und in einer zweiten Schaltstellung des Sicherheitsventils von der Druckquelle trennbar ist. Zusätzlich ist das Bremsschaltelement ist parallel zum Sicherheitsventil mit einer Entlüftung verbunden.

Alternativ hierzu ist es möglich, dass das Sicherheitsventil als ein 4/2-Wegeventil ausgebildet ist. Als weitere Variante kann auch ein 3/2-Wegeventil für diesen Zweck eingesetzt werden. Beide Varianten sind bevorzugt hydraulisch schaltbar ausgebildet.

Hierbei ergibt sich die vorteilhafte Möglichkeit, dass das Bremsschaltelement in einer ersten Schaltstellung des Sicherheitsventils durch dieses mit der Druckquelle verbindbar ist und in einer zweiten Schaltstellung des Sicherheitsventils von der Druckquelle trennbar und zusätzlich durch das Sicherheitsventil entlüftbar ist.

In einer weiteren Ausgestaltungsform ist vorgesehen, dass der auf das Bremsschaltelement wirkende Druck mittels eines Druckeinstellventils auf einen Maximalwert begrenzt ist.

In diesem Zusammenhang besteht die Möglichkeit, dass das Druckeinstellventil als Druckminderventil ausgebildet ist.

Alternativ hierzu kann das Druckeinstellventil auch als Druckbegrenzungsventil ausgebildet sein.

Eine vorteilhafte Ausgestaltung sieht vor, dass die Zuschalteinrichtung als 4/2-Wegeventil oder 3/2-Wegeventil ausgebildet ist. Bevorzugt ist das Wegeventil elektromagnetisch schaltbar.

Es ist ein Schiffsgetriebe möglich, in dem ein erfindungsgemäßes Hydrauliksystem angeordnet ist.

Ausführungsbeispiele der erfindungsgemäßen Hydrauliksteuerung sind in den Zeichnungen dargestellt und werden im Folgenden näher beschrieben.

Es zeigen
- Fig. 1: eine schematische Darstellung der erfindungsgemäßen hydraulischen Steuerung in Neutralstellung mit offener Wellenbremse,
- Fig. 2: eine schematische Darstellung der hydraulischen Steuerung in Neutralstellung mit geschlossener Wellenbremse,
- Fig. 3: eine schematische Darstellung der hydraulischen Steuerung bei eingelegtem Gang und offener, nicht aktivierter Wellenbremse,
- Fig. 4: eine schematische Darstellung der hydraulischen Steuerung bei eingelegtem Gang und aktiviertem Bremsschaltelement und
- Fig. 5: eine schematische Darstellung eines alternativ ausgestalteten Hydrauliksystems.

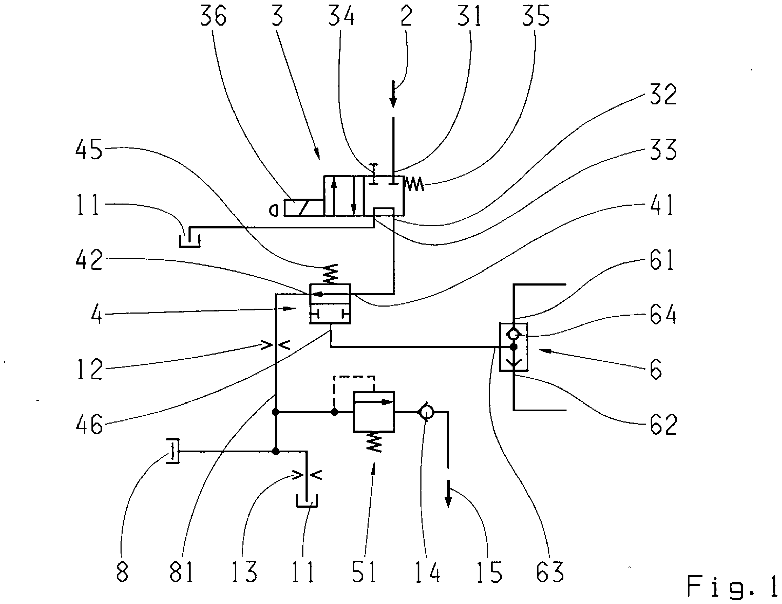

Fig. 1 zeigt eine schematische Darstellung eines Hydrauliksystems mit einer erfindungsgemäßen hydraulischen Steuerung. Diese umfasst eine Druckquelle 2, eine als elektrisch schaltbares Bremsventil 3 ausgebildete Zuschalteinrichtung, ein hydraulisch schaltbares Sicherheitsventil 4, ein Druckbegrenzungsventil 51, ein Bremsschaltelement 8 und ein Wechselventil 6. Das Wechselventil 6 weist einen Kupplungsdruckanschluss 61 auf, welcher von dem an einem ersten Getriebeschaltelement wirkenden Druck beaufschlagt ist, einen Kupplungsdruckanschluss 62, welcher von einem an einem zweiten Getriebeschaltelement wirkenden Druck beaufschlagt ist, sowie ein Steuerdruckausgang 63 zum Sicherheitsventil 4.

Das Getriebe kann hierbei in drei Schaltstellungen geschaltet werden: eine erste Schaltstellung, auch als Neutralstellung bezeichnet, in welcher beide Getriebeschaltelemente drucklos und damit geöffnet sind, wodurch kein Kraftschluss zwischen einer Antriebsmaschine und einem abtriebsseitigem Wellenstrang besteht. Im vorliegenden Anwendungsfall ist der abtriebsseitige Wellenstrang eine Propellerwelle eines Schiffs. In einer zweiten Schaltstellung ist das erste Getriebeschaltelement durch eine Druckbeaufschlagung geschlossen und das zweite Getriebeschaltelement drucklos und damit geöffnet. Eine Antriebsmaschine ist hierdurch mit dem abtriebsseitigen Wellenstrang drehfest verbunden, so dass sich beispielsweise der Propeller im Falle eines Schiffswendegetriebes der Propeller in einer ersten Drehrichtung dreht und das Schiff beispielsweise vorwärts bewegt. In einer dritten Schaltstellung ist das zweite Getriebeschaltelement durch eine Druckbeaufschlagung geschlossen und das erste Getriebeschaltelement drucklos und damit geöffnet. Eine Antriebsmaschine ist hierdurch mit einem abtriebsseitigen Wellenstrang drehfest verbunden, so dass sich beispielsweise der Propeller im Falle eines Schiffswendegetriebes in einer zweiten Drehrichtung dreht und das Schiff beispielsweise rückwärts bewegt oder aus der Vorwärtsfahrt abgebremst wird. Soll sich in der Neutralstellung die Propellerwelle nicht drehen, was beispielsweise durch die Strömungsenergie des umgebenden Wassers bewirkt werden könnte, ist das Bremsschaltelement zu Schließen und damit der Wellenstrang fest zu setzen, bzw. zu blockieren. Das Schließen des Bremsschaltelements erfolgt in dem Beispiel durch dessen Druckbeaufschlagung.

Es wäre aber auch denkbar, dass sowohl die Getriebeschaltelemente als auch das Bremsschaltelement beispielsweise im drucklosen Zustand durch Federkraft geschlossen sind und mittels einer Druckbeaufschlagung geöffnet werden. Hierbei wäre es auch möglich dass innerhalb eines Hydrauliksystems die Getriebeschaltelemente drucklos offen und das Bremsschaltelement drucklos geschlossen ist oder umgekehrt.

Das Bremsventil 3 ist hierbei als elektrisch in zwei Schaltstellungen schaltbares 4/2-Wegeventil ausgebildet und weist vier Anschlüsse 31, 32, 33 und 34 auf. Der Anschluss 31 ist mit der Druckquelle 2 und der Anschluss 32 mit einem Anschluss 41 des Sicherheitsventils 4 verbunden. Der Anschluss 33 ist entlüftet, worunter man die Verbindung mit einem drucklosen bzw. unter Umbebungsdruck stehenden Raum, einer so genannten Entlüftung 11 versteht. Der Anschluss 34 ist verschlossen, aus diesem Grunde wäre es auch möglich ein 3/2-Wegeventil zu verwenden. Die Verstellung des Bremsventils 3 erfolgt mittels des Einschaltens eines elektrischen Stromes, wodurch ein elektrischer Aktuator, beispielsweise ein Elektromagnet 36, das Bremsventil 3 entgegen der Kraft einer Feder 35 von der ersten in die zweite Schaltstellung verschiebt.

Das Sicherheitsventil 4 ist als hydraulisch in zwei Schaltstellungen schaltbares 2/2-Wegeventil ausgebildet, welches zwei Anschlüsse 41 und 42 aufweist. Der Anschluss 41 ist hierbei hydraulisch mit dem Anschluss 32 des Bremsventils 3 verbunden. Der Anschluss 42 ist durch eine Bremszuleitung 81 mit dem Bremsschaltelement 8 verbunden. Zudem ist der Anschluss 42 bzw. die Bremszuleitung 81 parallel mit dem Druckbegrenzungsventil 51 sowie einem drucklosen Raum verbunden, welcher auch als Entlüftung 11 bezeichnet wird. Die hydraulische Verstellung erfolgt mittels eines als Steuerdruck wirkenden hydraulischen Druckes, der durch einen Steuerdruckanschluss 46 auf das Sicherheitsventil 4 wirkt und dieses entgegen der Kraft einer Feder 45 von einer ersten Schaltstellung zu einer zweiten Schaltstellung verschiebt.

Der maximal mögliche Druck zum Schließen des Bremsschaltelements 8 wird mittels eines Druckeinstellventils begrenzt, welches hier als Druckbegrenzungsventil 51 ausgebildet ist. Bei Erreichen des maximal zulässigen Drucks öffnet das Druckbegrenzungsventil 51 und das Öl strömt durch ein Rückschlagventil 14 in einen Schmierzweig 15 des Getriebes ab.

In der Neutralstellung des Getriebes bei ungebremstem Wellenstrang befinden sich die Ventile 3 und 4 in den dargestellten Schaltstellungen. Das Bremsventil 3 ist stromlos und die Druckquelle 2 damit vom übrigen Hydrauliksystem abgesperrt. Der Steuerdruckausgang 63 ist drucklos und damit ebenso der Steuerdruckanschluss 46 am Sicherheitsventil 4, so dass der Anschluss 41 mit dem Anschluss 42 verbunden ist. Das Bremsschaltelement 8 ist über die Bremszuleitung 81 und das Sicherheitsventil 4 mit dem Anschluss 33 des Bremsventils 3 und damit in der dargestellten Schaltstellung des Bremsventils 3 mit einer Entlüftung 11 verbunden. Hierdurch ist das Bremsschaltelement 8 drucklos und damit geöffnet, so dass die Propellerwelle nicht blockiert ist. In der dargestellten Schaltstellung aller Ventile ist es auch möglich, dass sich nach einer vorangegangen Druckbeaufschlagung des Bremsschaltelements 8 nach Abschalten des Bremsventils 3 in die gezeigte Schaltstellung der Druck im Bremsschaltelement 3 bis auf Umgebungsdruck abbaut.

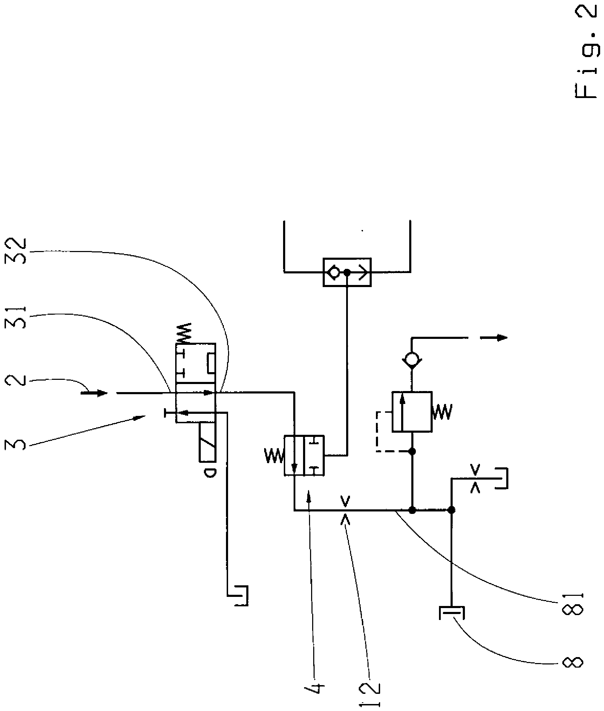

Soll in der Neutralstellung nun der Wellenstrang festgesetzt werden um beispielsweise ein unbeabsichtigtes Mitdrehen des Propellers in einer Strömung zu vermeiden, wird das Bremsschaltelement 8 mittels Einschalten des Bremsventils 3 aktiviert, was in Fig. 2 dargestellt ist. Das Bremsventil 3 wird nun elektrisch in eine zweite Schaltstellung geschaltet, in welcher die Anschlüsse 31 und 32 verbunden sind und damit die Druckquelle 2 über das Sicherheitsventil 4 mit dem Bremsschaltelement 8 verbunden ist. Hierdurch kann das Bremsschaltelement 8 mit Druck beaufschlagt und damit geschlossen werden, wodurch der Wellenstrang bzw. der Propeller festgesetzt ist. Damit durch das Zuströmen des Druckmediums zum Bremsschaltelement 8 der Druck in der Druckquelle nicht einbricht, ist eine Blende 12, welche auch als Drossel oder sonstige Querschnittsverengung ausgebildet sein kann, in der Bremszuleitung 81 angeordnet.

Ein Ausschalten des Bremsschaltelements 8 durch ein elektrisches Abschalten des Bremsventils 3 entspricht einer Rückkehr aus dem in Fig. 2 gezeigten Zustandes zu dem der in Fig. 1 dargestellt, wobei sich die Zustände nur in der Schaltstellung des Bremsventils 3 unterscheiden.

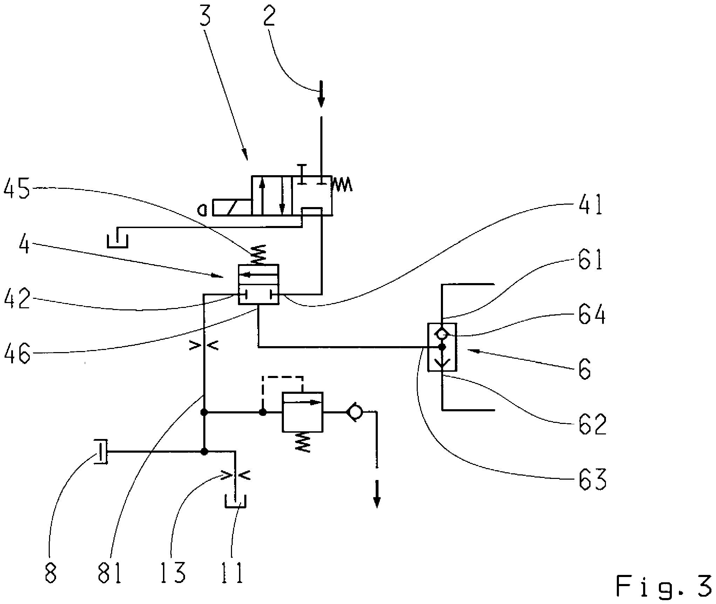

Fig. 3 zeigt das Hydrauliksystem bei eingelegtem Gang und offener, nicht aktiviertem Bremsschaltelement. Das Bremsventil 3 ist ausgeschaltet und die Druckquelle 2 damit abgesperrt. Der Kupplungsdruckanschluss 62 zum zweiten Getriebeschaltelement ist druckbeaufschlagt, wodurch ein Absperrelement 64 im Wechselventil 6 den drucklosen Kupplungsdruckanschluss 61 zum ersten Getriebeschaltelement verschließt und damit eine Druckabbau am zweite Getriebeschaltelement verhindert. Durch das Wechselventil 6 wird der Steuerdruckausgang 63, und damit auch der Steueranschluss 46, mit dem auf das zweite Getriebeschaltelement wirkenden Druck beaufschlagt. Durch diesen wird das Sicherheitsventil 4 entgegen der Kraft der Feder 45 in eine zweite Schaltstellung geschaltet, in welcher die Anschlüsse 41 und 42 abgesperrt und damit voneinander getrennt sind. Wird nun unbeabsichtigt das Bremsventil 3 eingeschaltet und nimmt die in Fig. 2 gezeigte Schaltstellung ein, so kann der Druck aus der Druckquelle nur bis zum Anschluss 41 wirken und das Bremsschaltelement 8 nicht beaufschlagen. Dieses ist drucklos, da es über die Bremszuleitung 81 und die Blende 13 mit der Entlüftung 11 verbunden ist.

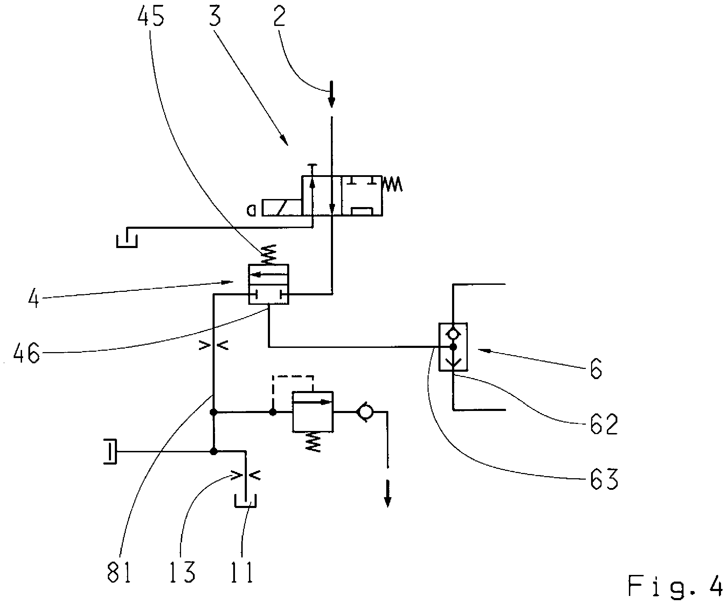

Fig. 4 zeigt das Hydrauliksystem bei eingeschaltetem Bremsventil 3, wobei unbeabsichtigt ein Gang geschaltet und damit in diesem Beispiel das zweite Getriebeschaltelement druckbeaufschlagt wurde. Hierdurch würde der unerwünschte Zustand eintreten, dass der von dem Bremsschaltelement 8 festgesetzte Wellenstrang plötzlich von der Antriebsmaschine angetrieben wird, wodurch sich die Antriebsanordnung verspannt und entweder das Bremsschaltelement 8 oder das zweite Getriebeschaltelement bzw. beispielsweise dessen Reibbeläge, zerstört werden könnten, oder andere Teile im Antriebsstrang beschädigt oder zerstört werden könnten. Dies wird jedoch durch die erfindungsgemäße Anordnung verhindert, da mit dem Zuschalten und damit der Druckbeaufschlagung des zweiten Getriebeschaltelements der Kupplungsdruckanschluss 62, der Steuerdruckausgang 63 und damit der Steuerdruckanschluss 46 des Sicherheitsventils 4 druckbeaufschlagt werden und damit das Sicherheitsventil 4 entgegen der kraft der Feder 45 in eine Schaltstellung geschaltet wird. In dieser Schaltstellung wird das Bremsschaltelement 8 von der Druckquelle 2 getrennt. Der noch am Bremsschaltelement 8 anliegende Druck baut sich durch die mit der Entlüftung 11 verbundene Bremszuleitung 81 bzw. die Blende 13 ab. Die Blende 13 ist so bemessen, dass dies in ausreichend kurzer Zeit erfolgt, um eine Beschädigung der Schaltelemente zu vermeiden. Die Blende kann hierbei auch als Drossel oder sonstiger hydraulischer Widerstand ausgebildet sein.

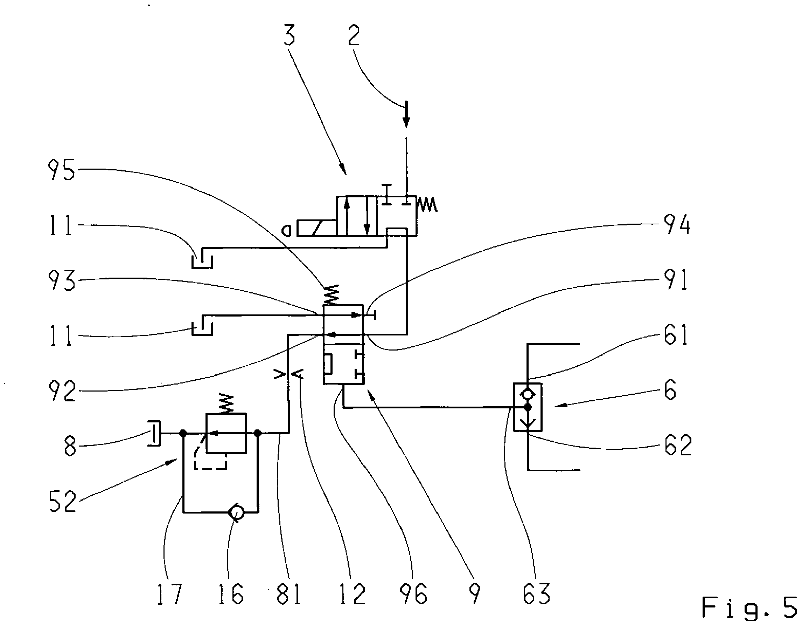

Fig. 5 zeigt ein erfindungsgemäßes Hydrauliksystem mit einer alternativen Ventilanordnung. Hierbei ist ein Sicherheitsventil 9 als 4/2-Wegeventil ausgebildet, welches vier Anschlüsse 91, 92, 93, 94 und einen Steuerdruckanschluss 96 aufweist. Der Anschluss 91 ist mit dem Anschluss 32 des Bremsventils 3 verbunden. Der Anschluss 94 ist verschlossen und der Anschluss 93 steht mit der Entlüftung 11 in Verbindung. Der Anschluss 92 ist durch die Bremszuleitung 81 und ein Druckminderventil 52, welches den Druck im Bremsschaltelement 8 auf einen maximal zulässigen Wert begrenzt, mit dem Bremsschaltelement 8 verbunden. Eine Ausgleichsleitung 17 verbindet durch ein Rückschlagventil 16 in einer Durchströmungsrichtung die Bremszuleitung 81 mit dem Bremsschaltelement 8. Als Alternative zu dem Druckminderventil 52 könnte das Druckeinstellventil auch als Druckbegrenzungsventil ausgebildet sein, welches parallel zum Bremsschaltelement 8 mit der Bremszuleitung 81 verbunden wäre und beim Erreichen des eingestellten Maximaldrucks zu einer Entlüftung oder zu einem Schmierzweig öffnet. Der Steuerdruckanschluss 96 ist durch den Steuerdruckausgang 63 und das Wechselventil 6 mit dem Kupplungsdruckanschluss 61 oder 62 des jeweils druckbeaufschlagten Getriebeschaltelements verbunden.

Das Hydrauliksystem befindet sich in der Darstellung in der Neutralstellung, d.h. die Getriebeschaltelemente und damit die Kupplungsdruckanschlüsse 61 und 62 sowie der Steuerdruckausgang 63 sind drucklos. Der Steuerdruckanschluss 96 ist hierdurch ebenfalls drucklos, wodurch sich das Sicherheitsventil 9 in einer Schaltstellung befindet, in welcher die Bremszuleitung 81 mit dem Bremsventil 3 verbunden ist. Der Elektromagnet 36 ist stromlos und damit das Bremsventil 3 in einer Schaltstellung, in welcher die Druckquelle 2 vom übrigen Hydrauliksystem getrennt ist. Das Bremsschaltelement 8 ist durch das die Ausgleichsleitung 17, das Rückschlagventil 16, die Bremszuleitung 81, das Sicherheitsventil 9 und das Bremsventil 3 mit der Entlüftung 11 verbunden.

Mit dem Einschalten des Elektromagneten 36 kann nun das Betriebsmedium aus der Druckquelle 2 das Bremsschaltelement 8 befüllen bzw. mit Druck beaufschlagen, wodurch der Wellenstrang, bzw. die Propellerwelle blockiert wäre. Wird nun unbeabsichtigt ein Gang eingelegt und beispielsweise das zweite Getriebeschaltelement druckbeaufschlagt, so würde durch das Wechselventil 6, bzw. durch den Kupplungsdruckanschluss 62 und die Steuerdruckausgang 63 das Sicherheitsventil 9 durch dessen Steuerdruckanschluss 96 entgegen der Kraft der Feder 95 in eine Schaltstellung geschaltet, in welcher das Bremsschaltelement 8 von der Druckquelle 2 getrennt wäre.

Das Bremsschaltelement 8 ist nun durch das Sicherheitsventil 9, bzw. dessen Anschlüsse 92 und 93, mit der Entlüftung 11 verbunden, wodurch der zum Lösen der Blockierung des Wellenstrangs erforderliche Druckabbau im Bremsschaltelement 8 erfolgen kann. Durch die Ausgestaltung des Sicherheitsventils 9 und des Druckeinstellventils 52 kann die permanente Verbindung des Bremsschaltelements 8 durch die Blende 13 mit der Entlüftung 11, wie in Fig. 1 bis 4 dargestellt, entfallen. Hierdurch wird die nachteilige Leckagemenge und der damit erhöhte Ölbedarf des Hydrauliksystems während der Zuschaltung des Bremsschaltelements 8 vorteilhafterweise reduziert

### Bezugszeichen

- 2: Druckquelle
- 3: Bremsventil
- 4: Sicherheitsventil
- 6: Wechselventil
- 8: Bremsschaltelement
- 9: Sicherheitsventil
- 11: Entlüftung
- 12: Blende
- 13: Blende
- 14: Rückschlagventil
- 15: Schmierdruckzweig
- 16: Rückschlagventil
- 17: Ausgleichsleitung
- 31: Anschluss
- 32: Anschluss
- 33: Anschluss
- 34: Anschluss
- 35: Feder
- 36: Elektromagnet
- 41: Anschluss
- 42: Anschluss
- 45: Feder
- 46: Steuerdruckanschluss
- 51: Druckbegrenzungsventil
- 52: Druckminderventil
- 61: Kupplungsdruckanschluss
- 62: Kupplungsdruckanschluss
- 63: Steuerdruckausgang
- 64: Absperrelement
- 81: Bremszuleitung
- 91: Anschluss
- 92: Anschluss
- 93: Anschluss
- 94: Anschluss
- 95: Feder
- 96: Steuerdruckanschluss

## Patentansprüche

1. Hydrauliksystem für ein Schiffsgetriebe, umfassend mindestens ein hydraulisch schaltbares Getriebeschaltelement, mindestens ein hydraulisch schaltbares Bremsschaltelement (8) und eine Zuschalteinrichtung (3) zum Öffnen oder Schließen des Bremsschaltelements (8), wobei das Getriebeschaltelement und das Bremsschaltelement (8) mit einem selben Wellenstrang drehfest verbindbar sind, wobei der Wellenstrang über das Getriebeschaltelement in dessen geschlossenem Zustand antreibbar ist und wobei der Wellenstrang über das Bremsschaltelement (8) in dessen geschlossenem Zustand blockierbar ist, **dadurch gekennzeichnet, dass** zwischen der Zuschalteinrichtung (3) und dem Bremsschaltelement (8) ein Sicherheitsventil (4, 9) angeordnet ist, wobei je nach Schaltstellung des Sicherheitsventils (4, 9) das Bremsschaltelement (8) mit der Zuschalteinrichtung (3) verbunden und damit zuschaltbar ist oder von dieser getrennt ist und damit abschaltbar ist, wobei das Sicherheitsventil (4,9) derart mit dem Getriebeschaltelement hydraulisch wirkverbunden ist, dass die Schaltstellung des Sicherheitsventils (4,9) durch den an dem Getriebeschaltelement wirkenden Druck einstellbar ist.

2. Hydrauliksystem nach Anspruch 1, **dadurch gekennzeichnet, dass** das Sicherheitsventil (4,9) derart angeordnet und ausgebildet ist, dass bei einem Druckzustand an dem Getriebeschaltelement , in welchem das Getriebeschaltelement geschlossen ist, durch diesen Druckzustand das Sicherheitsventil (4,9) in eine derartige Position geschaltet ist, in welcher an dem Bremsschaltelement (8) ein Druckzustand eingestellt ist, bei welchem das Bremsschaltelement (8) geöffnet ist.

3. Hydrauliksystem nach Anspruch 1 oder 2, **dadurch gekennzeichnet, dass** sowohl das Getriebeschaltelement als auch das Bremsschaltelement (8) im druckbeaufschlagten Zustand geschlossen und in drucklosem Zustand geöffnet sind, wobei das Sicherheitsventil (4,9) derart angeordnet und ausgebildet ist, dass bei Druckbeaufschlagung eines Getriebeschaltelements das Sicherheitsventil (4,9) in eine Schaltstellung geschaltet wird, in welcher das Bremsschaltelement (8) hydraulisch von der Zuschalteinrichtung (3) getrennt und drucklos ist.

4. Hydrauliksystem nach Anspruch 1, **dadurch gekennzeichnet, dass** die Zuschalteinrichtung als ein zwischen einer Druckquelle (2) und dem Bremsschaltelement (8) angeordneten Bremsventil (3) ausgebildet ist.

5. Hydrauliksystem nach Anspruch 3, **dadurch gekennzeichnet, dass** dieses zwei Getriebeschaltelemente aufweist, von welchen nur jeweils eines druckbeaufschlagt ist, wobei zwischen den Getriebeschaltelementen und dem Sicherheitsventil (4,9) ein Wechselventil (6) angeordnet ist, welches derart ausgebildet ist, dass nur das jeweils druckbeaufschlagte und damit geschlossene Getriebeschaltelement mit dem Sicherheitsventil verstellend wirkverbunden ist.

6. Hydrauliksystem nach Anspruch 5, **dadurch gekennzeichnet, dass** das Wechselventil (6) drei Anschlüsse (61,62,63) aufweist, wobei ein erster Kupplungsdruckanschluss (61) mit dem ersten Getriebeschaltelement und ein zweiter Kupplungsdruckanschluss (62) mit dem zweiten Getriebeschaltelement verbunden ist und der Steuerdruckausgang (63) mit dem Steuerdruckanschluss (46,96) des Sicherheitsventils (4,9) verbunden ist, wobei in dem Wechselventil (6) ein Verschlusselement (64) derart angeordnet ist, dass dieses in einer ersten Schaltstellung den zweiten Kupplungsdruckanschluss (62) und in einer zweiten Schaltstellung den ersten Kupplungsdruckanschluss (61) verschließt, wobei das Verschlusselement (64) bei einer Druckbeaufschlagung des ersten Getriebeschaltelements die erste Schaltstellung einnimmt und bei einer Druckbeaufschlagung des zweiten Getriebeschaltelements die zweite Schaltstellung einnimmt.

7. Hydrauliksystem nach Anspruch 1, **dadurch gekennzeichnet, dass** das Sicherheitsventil (4) als ein 2/2-Wegeventil ausgebildet ist.

8. Hydrauliksystem nach Anspruch 1, **dadurch gekennzeichnet, dass** das Sicherheitsventil (9) als ein 4/2-Wegeventil oder ein 3/2-Wegeventil ausgebildet ist.

9. Hydrauliksystem nach Anspruch 1, **dadurch gekennzeichnet, dass** der auf das Bremsschaltelement (8) wirkende Druck mittels eines Druckeinstellventils (51,52) auf einen Maximalwert begrenzt ist.

10. Hydrauliksystem nach Anspruch 9, **dadurch gekennzeichnet, dass** das Druckeinstellventil als Druckbegrenzungsventil (51) ausgebildet ist.

11. Hydrauliksystem nach Anspruch 9, **dadurch gekennzeichnet, dass** das Druckeinstellventil als Druckminderventil (52) ausgebildet ist.

12. Hydrauliksystem nach Anspruch 7, **dadurch gekennzeichnet, dass** das Bremsschaltelement (8) in einer ersten Schaltstellung des Sicherheitsventils (4) durch dieses mit der Druckquelle (2) verbindbar ist und in einer zweiten Schaltstellung des Sicherheitsventils (4) von der Druckquelle (2) trennbar ist, wobei das Bremsschaltelement (8) parallel zum Sicherheitsventil (4) mit einer Entlüftung (11) verbunden ist.

13. Hydrauliksystem nach Anspruch 8, **dadurch gekennzeichnet, dass** das Bremsschaltelement (8) in einer ersten Schaltstellung des Sicherheitsventils (9) durch dieses mit der Druckquelle (2) verbindbar ist und in einer zweiten Schaltstellung des Sicherheitsventils (9) von der Druckquelle (2) trennbar und durch dieses entlüftbar ist.

14. Hydrauliksystem nach Anspruch 4, **dadurch gekennzeichnet, dass** das Bremsventil (3) als ein 4/2-Wegeventil oder 3/2-Wegeventil ausgebildet ist.

15. Schiffsgetriebe mit einem Hydrauliksystem nach Anspruch 1.
